# FASCICULE DE BREVET EUROPEEN

(11) **EP 1 269 826 B1**
(45) Date de publication et mention de la délivrance du brevet: **08.03.2006**
(21) Numéro de dépôt: 02360185.9
(22) Date de dépôt: 20.06.2002
(51) Int. Cl.: A01D 78/12, A01D 78/10

(54) **Machine de fenaison**
Heuwerbungsmaschine
Haymaking machine

(30) Priorité: 22.06.2001 FR 0108320
(43) Date de publication de la demande: 02.01.2003
(73) Titulaire: KUHN S.A., 67706 Saverne Cedex (FR)
(72) Inventeur: Gantzer, Christian, 57820 Dannelbourg (FR)
(74) Mandataire: Andres, Jean-Claude

(56) Documents cités:
- AT-B- 352 459
- DE-A- 2 206 125
- DE-A- 2 357 049
- DE-A- 3 622 855
- GB-A- 1 507 432
- US-A- 3 546 867
- US-A- 5 502 959

## Description

La présente invention se rapporte à une machine de fenaison pour l'andainage de fourrage, comportant un bâti qui porte au moins un rotor avec des bras commandés par une came et munis d'outils de travail constitués par des fourches, lequel rotor est monté rotatif sur un axe central creux qui est sensiblement vertical ou légèrement incliné vers l'avant et qui porte à son extrémité dirigée vers le bas un support avec au moins une roue porteuse qui roule sur le sol et porte le rotor durant le travail, la position dudit support par rapport à l'axe central pouvant être modifiée depuis le côté supérieur du rotor, pour le réglage de la distance des outils par rapport au sol.

Un tel agencement connu dans la demande de brevet DE 2 357 049 permet de régler la position des outils de travail sans qu'il y ait eu lieu d'accéder sous le rotor. Ce réglage s'effectuant généralement avec le rotor reposant sur le sol, la masse à soulever pour augmenter la distance des outils par rapport au sol est très importante. Cela demande des efforts importants en cas de réglage manuel ou l'utilisation de moyens puissants et coûteux en cas de réglage à l'aide d'un moteur par exemple.

La présente invention a notamment pour but de faciliter le réglage de la distance par rapport au sol des outils de travail afin de supprimer les inconvénients précités.

A cet effet, une importante caractéristique de l'invention consiste en ce que un ressort de délestage est disposé entre le support qui est équipé de la ou des roues porteuses et la partie du rotor qui comporte les outils de travail. Ce ressort de délestage s'appuie sur ledit support et pousse le rotor vers le haut par rapport au sol. Il favorise ainsi le déplacement vers le haut du rotor et des outils en vue d'augmenter leur hauteur de travail. Les efforts à fournir pour effectuer ce réglage sont ainsi peu importants.

La descente du rotor pour rapprocher les outils de travail du sol, est facilitée par le poids du rotor lui-même.

Selon d'autres caractéristiques de l'invention, le support qui est équipé d'au moins une roue porteuse est monté déplaçable en hauteur sur l'axe central du rotor. Il est relié à un entraîneur de manière à être libre en rotation mais solidaire en translation de celui-ci. Cet entraîneur est vissé dans un alésage fileté de l'axe central du rotor. Il est en sus lié à une tige de commande de manière à être libre en translation mais solidaire en rotation de celle-ci. La tige de commande s'étend longitudinalement à travers l'axe central du rotor et est relié à un moyen d'entraînement situé au dessus du rotor. Ce moyen d'entraînement peut être constitué par une manivelle actionnée aisément par un opérateur. Le moyen d'entraînement peut aussi être constitué par un moteur tel qu'un moteur électrique de faible puissance.

D'autres caractéristiques et avantages de l'invention ressortiront des revendications et de la description ci après d'exemples de réalisation non limitatifs de l'invention, avec références aux dessins annexés dans lesquels :
- La figure 1 représente un premier exemple de réalisation d'une machine selon l'invention.
- La figure 2 représente à plus grande échelle, une coupe d'un rotor selon l'invention.
- La figure 3 représente un autre exemple de réalisation d'une machine selon l'invention.

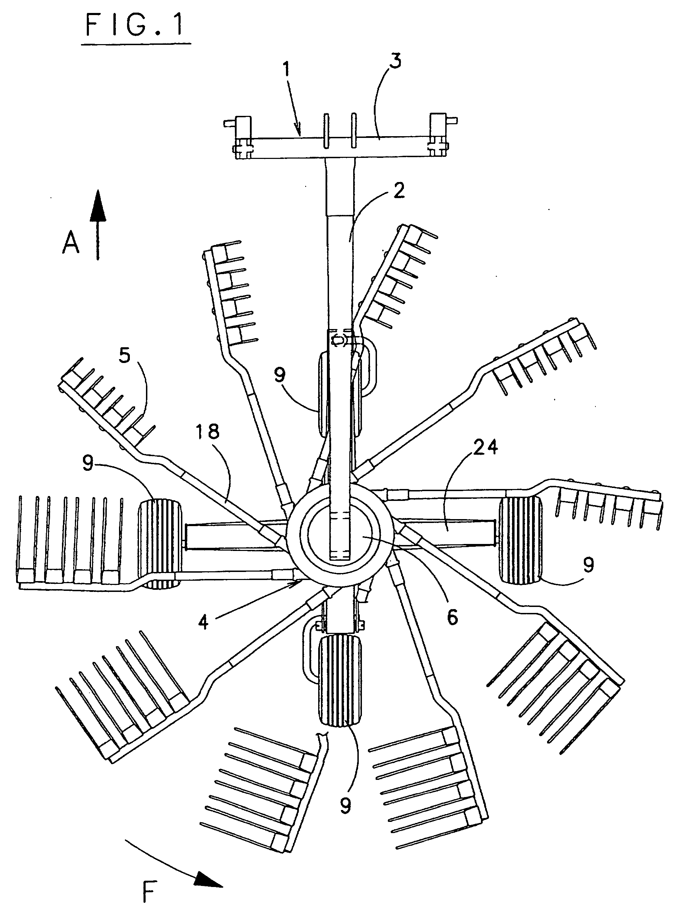

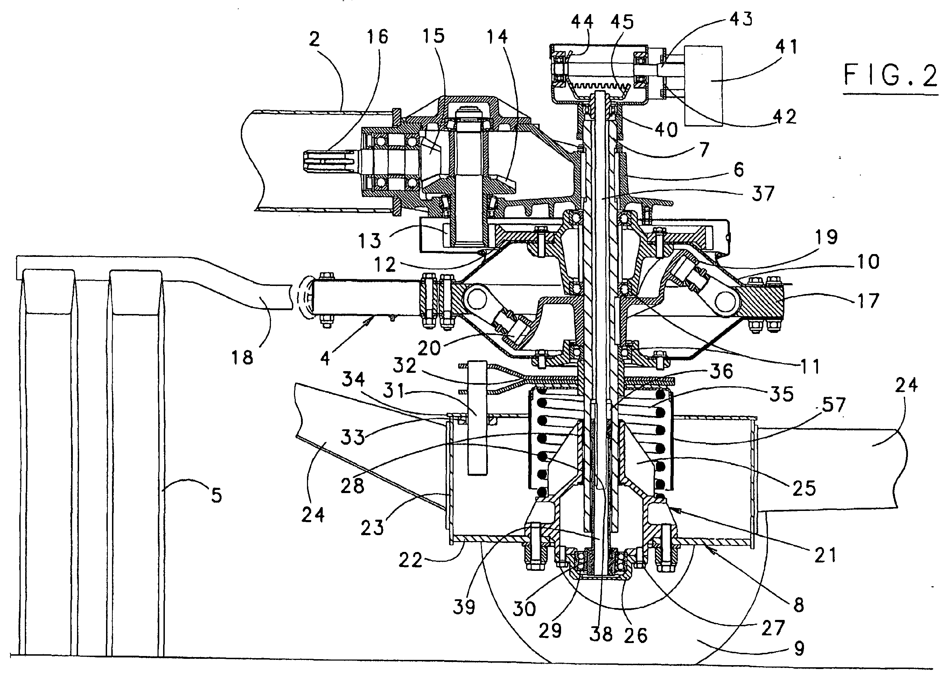

La machine de fenaison représentée sur la figure 1 comporte notamment un bâti (1). Celui-ci est constitué par une poutre (2) qui porte à son extrémité avant un dispositif d'accouplement trois points (3) pour l'accrochage à un tracteur d'entraînement permettant de la déplacer dans une direction d'avancement (A). L'autre extrémité de la poutre (2) porte un rotor (4) avec des outils de travail (5) destinés à andainer des produits tels que de l'herbe ou de la paille fauchée se trouvant sur le sol. Ce rotor (4) possède un carter (6) qui est relié à la dite poutre (2). Comme cela ressort de la figure 2, le carter (6) porte un axe central creux (7) qui est sensiblement vertical ou légèrement incliné vers l'avant. Cet axe (7) comporte à son extrémité inférieure un support (8) avec quatre roues porteuses (9) situées sous le rotor (4). Sur la partie de l'axe (7) qui s'étend en-dessous du carter (6) est disposé un boîtier (10). Celui-ci est monté sur ledit axe (7) à l'aide de roulements à billes (11) afin de pouvoir être entraîné en rotation. Le côté supérieur du boîtier (10) est muni d'une couronne dentée (12) qui se situe sous le carter (6). Cette couronne (12) engrène avec une roue dentée (13) à laquelle est associée un pignon (14). Un deuxième pignon (15) qui est monté sur un arbre (16) engrène avec ledit pignon (14). L'arbre (16) s'étend hors du carter (6) et peut être relié à un arbre de prise de force du tracteur à l'aide d'arbres de transmission intermédiaires non représentés.

Le boîtier (10) est muni de paliers (17) à travers lesquels passent des bras (18). Ceux-ci s'étendent en forme de rayons et portent à leurs extrémités extérieures les outils de travail (5) qui sont constitués par des fourches. Ces bras (18) sont logés dans lesdits paliers (17) de manière à pouvoir tourner sur eux-mêmes. Sur la partie de l'axe (7) qui se situe dans le boîtier (10) est montée une came fixe (19) destinée à commander les bras porte-outils (18) durant le travail d'andainage. Pour cela, chacun de ces bras (18) possède à son extrémité qui s'étend à l'intérieur du boîtier (10) un levier avec un galet (20) qui est guidé dans une gorge de ladite came (19).

Le support (8) des roues porteuses (9) est constitué par un élément porteur central (21) auquel est relié une structure formée par une plaque de base (22) et une paroi (23) sensiblement verticale qui se situe tout autour de ladite plaque (22). Cette paroi (23) est solidaire de la plaque (22). Elle porte quatre poutrelles (24) disposées en forme de croix et dont chacune est munie d'une roue porteuse (9).

La position du support (8) des roues porteuses (9) sur l'axe central (7) peut être modifiée, à partir du côté supérieur du rotor (4), pour le réglage de la distance des outils de travail (5) par rapport au sol. Ledit support (8) est monté coulissant sur l'axe central (7) par l'intermédiaire de l'élément porteur central (21). Celui-ci est réalisé en une partie supérieure (25) et une partie inférieure (26) qui sont assemblées au moyen de vis (27). La partie supérieure (25) qui est en forme d'entonnoir est montée sur l'axe central (7) à l'aide de bagues (28) lui permettant de glisser sur ledit axe. La partie inférieure (26) est en forme de couvercle fermant le côté dirigé vers le bas de la partie supérieure (25). Cette partie inférieure (26) est montée au moyen d'un roulement à billes (29) sur un entraîneur (30). Elle est ainsi libre en rotation mais solidaire en translation de cet entraîneur (30).

Ce mode de montage de l'élément porteur central (21) sur l'axe (7) lui permet de pivoter dans un plan horizontal, et donc à tout le support (8) avec les roues porteuses (9), autour dudit axe (7) sans que cela provoque une variation de leur position dans le sens longitudinal. Les roues (9) ont ainsi la possibilité de s'orienter dans la direction de déplacement (A) imprimée par le tracteur. Ce pivotement du support (8) et des roues (9) peut être limité au moyen d'un arrêt (31) qui est solidaire d'un bras (32) fixé sur l'axe central (7), lequel arrêt est engagé dans un orifice (33) en forme d'arc de cercle prévu dans une pièce (34) formant butée et qui est fixée sur la paroi (23) du support (8). Les bords opposés dudit orifice (33) bloquent l'arrêt (31) dans les positions extrêmes, ce qui permet d'éviter des débattements trop importants du support (8) et des roues (9).

Un ressort de délestage (35) est disposé entre la partie du rotor (4) avec les outils de travail (5) et le support (8) muni des roues porteuses (9). Ladite partie comporte notamment l'axe central (7), le boîtier (10) avec les bras porte-outils (18) et la came (19), ainsi que le carter (6) et les moyens d'entraînement en rotation (12 à 16). Le ressort (35) est du type à pression et comporte des spires qui entourent l'axe central (7). Il s'appuie, d'une part, sur le bras (32) qui est solidaire de l'axe central (7) du rotor (4) et, d'autre part, sur l'élément porteur central (21) du support (8). Il assure ainsi également un certain freinage du pivotement du support (8) autour de l'axe central (7), ce qui permet d'éviter des mouvements trop brusques. Ledit ressort (35) est avantageusement entouré d'une gaine de protection (57).

L'entraîneur (30), auquel est relié l'élément porteur central (21), possède un corps cylindrique fileté qui est vissé dans la partie inférieure filetée d'un alésage (36) qui s'étend sur toute la longueur de l'axe central (7). Dans cet alésage (36) est logée une tige de commande (37). Celle-ci est reliée à l'entraîneur (30) de sorte que celui-ci en soit solidaire en rotation mais libre en translation pour qu'il puisse se déplacer longitudinalement dans l'alésage (36) de l'axe central (7). La liaison en rotation est assurée par l'intermédiaire d'une clavette (38) qui est montée sur la tige de commande (37) et qui est engagée dans une rainure longitudinale prévue dans un alésage (39) qui traverse l'entraîneur (30).

La tige de commande (37) est guidée de manière à être libre en rotation et fixe en translation par rapport à l'axe central (7). Ce guidage est réalisé à l'aide d'un roulement à billes (40) située près de l'extrémité supérieure de l'axe central (7). La tige de commande (37) s'étend vers le haut, au delà de l'axe central (7) et est reliée à un moyen d'entraînement (41). Dans l'exemple représenté, celui-ci est constitué par un moteur électrique qui est fixé sur une tablette (42) reliée à l'axe (7) du rotor (4). L'arbre (43) de ce moteur (41) porte une roue dentée (44) qui engrène avec une deuxième roue dentée (45) qui est solidaire de la tige de commande (37). Ces roues dentées (44 et 45) assurent la transmission de l' entraînement du moteur (41) à la tige (37). Le moteur électrique pourrait être remplacé par un moteur hydraulique ou par une manivelle qui est actionnée par l'utilisateur.

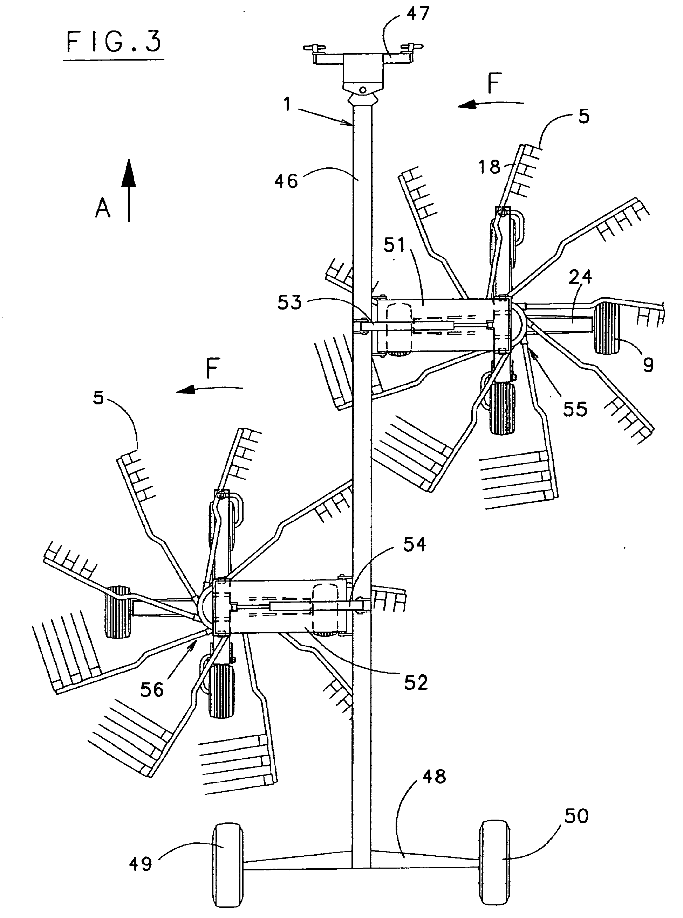

La machine selon la figure 3 comporte une structure porteuse (1) constituée par une poutre (46) qui possède à son extrémité avant un dispositif d'accouplement deux points (47) pour l'accrocher à un tracteur d'entraînement et à son extrémité arrière une traverse (48) avec deux roues de déplacement (49 et 50) qui reposent sur le sol. Ladite structure (1) possède en sus deux bras latéraux (51 et 52) qui sont articulés sur la poutre (46) et qui sont relevables au moyen de vérins hydrauliques (53 et 54). Chacun de ces bras (51 et 52) porte un rotor (55, 56) qui est réalisé de la même manière que le rotor (4) précité et ne sera plus décrit en détail. Ces deux rotors (55 et 56) sont décalés l'un par rapport à l'autre et les trajectoires de leurs outils de travail (5) se recouvrent partiellement. Dans une variante de réalisation il est également possible de placer les deux rotors (55 et 56) sur une même ligne perpendiculaire au sens d'avancement (A). Il est en sus possible d'équiper la machine de trois ou de quatre rotors semblables au rotor (4), en vue d'augmenter sa largeur de travail.

Durant le travail d'andainage, la machine selon la figure 1 est déplacée sur le sol dans la direction d'avancement (A) au moyen d'un tracteur. Les roues (9) roulent sur le sol et portent le rotor (4). Elles s'orientent automatiquement dans les virages grâce à l'élément porteur central (21) du support (8) qui tourne sur l'axe central (7) et l'entraîneur (30), tout en restant dans le même plan horizontal et étant freiné par le ressort (35). Le boîtier (10) du rotor (4) est alors entraîné en rotation dans le sens (F), autour de l'axe central (7), à partir de l'arbre de puise de force du tracteur. Les galets (20) des bras porte-outils (18) se déplacent alors dans la came (19) qui les commande de telle sorte que dans la partie avant de leur trajectoire les outils (5) soient sensiblement verticaux et ramassent les produits se trouvant sur le sol. Ensuite, sur la partie latérale de leur trajectoire, les bras (18) pivotent pour que les outils (5) se lèvent et déposent les produits ramassés sous la forme d'un andain. Enfin, sur la partie arrière de leur trajectoire, ces outils (5) sont ramenés progressivement dans la position pour ramasser les produits.

La distance des outils de travail (5) par rapport au sol, dans la partie avant de leur trajectoire, ne doit pas être ni trop importante ni trop faible. Dans le premier cas, lesdits outils (5) laissent des traînées de fourrage sur le sol, alors que dans le second cas ils grattent le sol, mélangent de la terre au fourrage et abîment le tapis végétal. Cette distance peut facilement être réglée au moyen du moteur électrique (41). Lorsqu'il est mis en marche et qu'il tourne par exemple dans un premier sens, il entraîne la tige de commande (37) de sorte qu'elle fasse tourner l'entraîneur (30) dans le sens où il pénètre, à la manière d'une vis, dans l'alésage (36) de l'axe central (7). Lors de ce déplacement, l'entraîneur (30) fait glisser l'élément porteur central (21) du support (8) des roues (9) sur l'axe central (7) en direction du boîtier (10), lequel élément porteur (21) comprime le ressort de délestage (35). La distance entre le boîtier (10) et les roues (9) se réduit alors, ce qui permet aux outils de travail (5) de se rapprocher du sol en position de travail. Inversement, lorsque le moteur (41) tourne dans le sens contraire, il actionne la tige de commande (37) de sorte qu'elle fasse tourner l'entraîneur (30) dans le sens où il sort de la partie filetée de l'alésage (36). Il fait alors glisser l'élément porteur central (21) du support (8) des roues (9) sur l'axe central (7) de sorte qu'il s'éloigne du boîtier (10). Lorsque les roues (9) sont sur le sol, ce déplacement a pour effet d'éloigner les outils de travail (5) du sol. Le ressort de délestage (35) pousse le rotor (4) vers le haut et favorise grandement ledit déplacement. Celui-ci peut ainsi s'opérer sans grands efforts.

Au travail, la machine selon la figure 3 est attelée à un tracteur qui la déplace dans la direction (A). Les deux bras (51 et 52) qui portent les rotors (55 et 56) sont abaissés de sorte que les roues (9) desdits rotors (55 et 56) roulent sur le sol. Ces roues (9) s'orientent automatiquement dans la direction d'avancement (A) au moyen des supports (8) qui sont montés avec leurs éléments porteurs centraux (21) de manière à pouvoir tourner sur les axes (7) et les entraîneurs (30) desdits rotors. Les boîtiers (10) sont entraînés en rotation dans le même sens (F). Les outils de travail (5) du rotor (55) le plus en avant ramassent le fourrage sur le partie avant de leur trajectoire et le dépose devant le deuxième rotor (56) sous la forme d'un andain. Les outils de travail (5) de ce deuxième rotor (56) reprennent la totalité du fourrage et forment un andain latéral de gros volume.

La distance par rapport au sol des outils (5) de chaque rotor (55 et 56) peut être réglée de la manière décrite précédemment au moyen du moteur électrique (41) correspondant.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection défini dans les revendications.

## Revendications

1. Machine de fenaison pour l'andainage de fourrage, comportant un bâti (1) qui porte au moins un rotor (4, 55, 56) avec des bras (18) commandés par une came (19) et munis d'outils de travail (5) constitués par des fourches, lequel rotor (4, 55, 56) est monté rotatif sur un axe central creux (7) qui est sensiblement vertical ou légèrement incliné vers l'avant et qui porte à son extrémité dirigée vers le bas un support (8) avec au moins une roue porteuse (9) qui roule sur le sol et porte le rotor (4, 55, 56) durant le travail, la position dudit support (8) par rapport à l'axe central creux (7) pouvant être modifiée à partir du côté supérieur du rotor (4, 55, 56) pour le réglage de la distance des outils (5) par rapport au sol, ***caractérisée par** l**e fait qu**'un* ressort de délestage (35) est disposé entre le support (8) et la partie du rotor (4, 55, 56) comportant les outils de travail (5), pour faciliter ledit réglage.

2. Machine selon la revendication 1, ***caractérisée par le fait que*** le ressort de délestage (35) est un ressort de pression poussant constamment la partie du rotor (4, 55, 56) comportant les outils (5) vers le haut par rapport au support (8) lors du réglage.

3. Machine selon la revendication 2 ***caractérisée par le fait que*** le support (8) est monté déplaçable en hauteur sur l'axe central creux (7) du rotor (4, 55, 56).

4. Machine selon la revendication 3, ***caractérisée par le fait que*** le support (8) est relié à un entraîneur (30) de manière à être libre en rotation par rapport à celui-ci mais solidaire en translation.

5. Machine selon la revendication 4, ***caractérisée par le fait que*** l'entraîneur (30) comporte un corps cylindrique fileté qui est vissé dans une partie filetée d'un alésage (36) de l'axe central creux (7) du rotor (4, 55, 56).

6. Machine selon la revendication 5, ***caractérisée par le fait que*** l'entraîneur (30) est lié à une tige de commande (37) de manière à être libre en translation mais solidaire en rotation de celle-ci.

7. Machine selon la revendication 6, ***caractérisée par le fait que*** l'entraîneur (30) est lié en rotation avec la tige de commande (37) au moyen d'une clavette (38).

8. Machine selon la revendication 6 ou 7, ***caractérisée par le fait que*** l'entraîneur (30) comporte un alésage (39) dans lequel s'étend la tige de commande (37).

9. Machine selon l'une quelconque des revendications 6 à 8, ***caractérisée par le fait que*** la tige de commande (37) s'étend à travers l'axe central creux (7) du rotor (4, 55, 56) et est reliée à un moyen d'entraînement (41) situé au-dessus du rotor (4, 55, 56).

10. Machine selon la revendication 9, ***caractérisée par le fait que*** la tige de commande (37) est guidée au moyen d'un roulement à billes (40) de manière à être libre en rotation et fixe en translation par rapport à l'axe central creux (7).

11. Machine selon la revendication 9, ***caractérisée par le fait que*** le moyen d'entraînement (41) de la tige de commande (37) est constitué par une manivelle.

12. Machine selon la revendication 9, ***caractérisée par le fait que*** le moyen d'entraînement (41) de la tige de commande (37) est constituée par un moteur électrique.

13. Machine selon la revendication 1 ou 2, ***caractérisée par le fait que*** le ressort de délestage (35) est entouré d'une gaine de protection (57).

## Patentansprüche

1. Heuwerbungsmaschine zur Futterschwadablage mit einem Gestell (1), das mindestens einen Rotor (4, 55, 56) mit Armen (18) trägt, die von einer Nocke (19) gesteuert werden und mit Arbeitswerkzeugen (5), die von Gabeln gebildet sind, versehen sind, wobei der Rotor (4, 55, 56) drehbar auf einer hohlen Mittelachse (7) angeordnet ist, die im Wesentlichen vertikal oder leicht nach vorne geneigt ist und die an ihrem nach unten gerichteten Ende eine Stütze (8) mit mindestens einem Tragrad (9) trägt, das am Boden rollt und den Rotor (4, 55, 56) während der Arbeit trägt, wobei die Position der Stütze (8) bezüglich der hohlen Mittelachse (7) von der oberen Seite des Rotors (4, 55, 56) aus verändert werden kann, um den Abstand der Werkzeuge (5) zum Boden einzustellen, ***dadurch gekennzeichnet,* dass** eine Entlastungsfeder (35) zwischen der Stütze (8) und dem Teil des Rotors (4, 55, 56) der die Arbeitswerkzeuge (5) trägt, angeordnet ist um die Einstellung zu erleichtern.

2. Maschine nach Anspruch 1, ***dadurch gekennzeichnet,* dass** die ' Entlastungsfeder (35) eine Druckfeder ist, die den Teil des Rotors (4, 55, 56), der die Arbeitswerkzeuge (5) trägt, während der Einstellung andauernd nach oben in Bezug auf die Stütze (8) schiebt.

3. Maschine nach Anspruch 2, ***dadurch gekennzeichnet*, dass** die Stütze (8) in der Höhe nach verschiebbar auf der hohlen Mittelachse (7) des Rotors (4, 55, 56) angeordnet ist.

4. Maschine nach Anspruch 3, ***dadurch gekennzeichnet,* dass** die Stütze (8) mit einem Antriebselement (30) derart verbunden ist, dass sie zu diesem frei drehbar, aber in Translation fest ist.

5. Maschine nach Anspruch 4, ***dadurch gekennzeichnet,* dass** das Antriebselement (30) einen zylindrischen Gewindekörper umfasst, der in einen Gewindeteil einer Bohrung (36) der hohlen Mittelachse (7) des Rotors (4, 55, 56) geschraubt ist.

6. Maschine nach Anspruch 5, ***dadurch gekennzeichnet,* dass** das Antriebselement (30) mit einer Steuerstange (37) derart verbunden ist, dass es in Translation frei, aber in Drehung fest mit dieser verbunden ist.

7. Maschine nach Anspruch 6, ***dadurch gekennzeichnet,* dass** das Antriebselement (30) drehfest mit der Steuerstange (37) mit Hilfe eines Keils (38) verbunden ist.

8. Maschine nach Anspruch 6 oder 7, ***dadurch gekennzeichnet,* dass** das Antriebselement (30) eine Bohrung (39) umfasst, in der sich die Steuerstange (37) erstreckt.

9. Maschine nach irgend einem der Ansprüche 6 bis 8, ***dadurch gekennzeichnet,* dass** sich die Steuerstange (37) durch die hohle Mittelachse (7) des Rotors (4, 55, 56) erstreckt und mit einem sich über dem Rotor (4, 55, 56) befindenden Antriebsmittel (41) verbunden ist.

10. Maschine nach Anspruch 9, ***dadurch gekennzeichnet,* dass** die Steuerstange (37) mit Hilfe eines Kugellagers (40) derart geführt wird, dass sie in Drehung frei und in Translation fest in Bezug auf die hohle Mittelachse (7) ist.

11. Maschine nach Anspruch 9, ***dadurch gekennzeichnet,* dass** das Antriebsmittel (41) der Steuerstange (37) von einer Kurbel gebildet ist.

12. Maschine nach Anspruch 9, ***dadurch gekennzeichnet,* dass** das Antriebsmittel (41) der Steuerstange (37) von einem Elektromotor gebildet ist.

13. Maschine nach Anspruch 1 oder 2, ***dadurch gekennzeichnet,* dass** die Entlastungsfeder (35) von einer Schutzhülse (57) umgeben ist.

## Claims

1. Haymaking machine for windrowing forage, comprising a frame (1) which supports at least one rotor (4, 55, 56) with arms (18) controlled by a cam (19) and provided with working tools (5) consisting of forks, the said rotor (4, 55, 56) being mounted so as to rotate on a hollow central shaft (7) which is substantially vertical or slightly inclined forwards and which carries at its end directed downwards a support (8) with at least one carrier wheel (9) which runs on the ground and supports the rotor (4, 55, 56) during work, the position of the said support (8) relative to the hollow central shaft (7) being modifiable from the top side of the rotor (4, 55, 56) to adjust the distance of the tools (5) from the ground, ***characterized in* that** a lift-off spring (35) is placed between the support (8) and the portion of the rotor (4, 55, 56) comprising the working tools (5), to make the said adjustment easier.

2. Machine according to Claim 1, ***characterized in* that** the lift-off spring (35) is a pressure spring constantly pushing the portion of the rotor (4, 55, 56) comprising the tools (5) upwards relative to the support (8) during adjustment.

3. Machine according to Claim 2, ***characterized in* that** the support (8) is mounted so as to be movable in height on the hollow central shaft (7) of the rotor (4, 55, 56).

4. Machine according to Claim 3, ***characterized in* that** the support (8) is connected to a drive element (30) so as to be free to rotate relative to the latter but fixedly attached in translation.

5. Machine according to Claim 4, ***characterized in* that** the drive element (30) comprises a threaded cylindrical body that is screwed into a threaded portion of a bore (36) of the hollow central shaft (7) of the rotor (4, 55, 56).

6. Machine according to Claim 5, ***characterized in* that** the drive element (30) is linked to a control rod (37) so as to be free in translation but fixedly attached in rotation to the latter.

7. Machine according to Claim 6, ***characterized in* that** the drive element (30) is linked in rotation to the control rod (37) by means of a cotter (38).

8. Machine according to Claim 6 or 7, ***characterized in* that** the drive element (30) comprises a bore (39) into which the control rod (37) extends.

9. Machine according to any one of Claims 6 to 8, ***characterized in* that** the control rod (37) extends through the hollow central shaft (7) of the rotor (4, 55,56) and is connected to a drive means (41) situated above the rotor (4, 55, 56).

10. Machine according to Claim 9, ***characterized in* that** the control rod (37) is guided by means of a ball bearing (40) so as to be free to rotate and fixed in translation relative to the hollow central shaft (7).

11. Machine according to Claim 9, ***characterized in* that** the drive means (41) of the control rod (37) consists of a handle.

12. Machine according to Claim 9, ***characterized in* that** the drive means (41) of the control rod (37) consists of an electric motor.

13. Machine according to Claim 1 or 2, ***characterized in* that** the lift-off spring (35) is surrounded by a protective sleeve (57).
